# EUROPÄISCHE PATENTSCHRIFT

(11) **EP 2 962 803 B1**
(45) Veröffentlichungstag und Bekanntmachung des Hinweises auf die Patenterteilung: **18.04.2018**
(21) Anmeldenummer: 15175152.6
(22) Anmeldetag: 02.07.2015
(51) Int. Cl.: B23K 37/00

(54) **ERGONOMISCHE SCHWEISSMASCHINE**
ERGONOMIC WELDING MACHINE
MACHINE A SOUDER ERGONOMIQUE

(30) Priorität: 02.07.2014 DE 202014103039 U
(43) Veröffentlichungstag der Anmeldung: 06.01.2016
(73) Patentinhaber: conntronic Prozess- und Automatisierungstechnik GmbH, 86167 Augsburg (DE)
(72) Erfinder: Reverchon, Günther, 82335 Berg (DE)
(74) Vertreter: Ernicke, Klaus Stefan

(56) Entgegenhaltungen:
- EP-A2- 0 100 416
- DE-A1- 19 918 298
- DE-A1-102011 006 352
- DE-C1- 4 138 139

## Beschreibung

Die Erfindung betrifft eine Schweißmaschine mit einem Arbeitstisch und einem darüber gebildeten Werkbereich, an dem ein oder mehrere Werker zu schweißende Bauteile einlegen, ggf. spannen und unter Nutzung eines Schweißwerkzeugs der Schweißmaschine bearbeiten können. Mit anderen Worten betrifft die Erfindung eine manuell betätigbare Schweißmaschine für die Einzel- oder Serienfertigung, d.h. eine Schweißmaschine zum manuellen Schweißen.
Die in der Praxis bekannten Schweißmaschinen der vorgenannten Art weisen nur einen geringen Bedienkomfort auf und sind nur mäßig an die Bedürfnisse der Werker anpassbar. Ferner wird für etwaige Anpassungen eine hohe Bedienkraft erfordert oder es müssen mehrere bis viele Arbeitsschritte unternommen werden, um die Anpassung zu bewirken.
Aus DE 41 38 139 C1 und der DE 32 28 378 A1 sind Schweißanlagen für die automatisierte Fertigung bekannt, bei denen Bauteile über sogenannte "Shuttles" zwischen mehreren Arbeitsstationen bewegt werden, wobei diese Arbeitsstationen in einem gemeinsamen festgelegten Takt automatisierte Schweißvorgänge ausführen. Diese Anlagen sind auf eine möglichst hohe Ausbringungsmenge optimiert und werden im laufenden Produktionsbetrieb nicht manuell bedient. Sie weisen ferner keinen Arbeitstisch für einen Werker auf.

Aus der DE 199 18 298 A1 und der DE 10 2011 006 352 A1 sind ein höhenverstellbares Pult und ein höhenverstellbarer Arbeitstisch in leichter Bauweise bekannt, die zum Bedienen einer Tablettenpressvorrichtung bzw. zum Prüfen oder Montieren von Bauteilen verwendet werden. Schweißvorgänge können an solchen Tischen nicht ausgeführt werden.

Aus der De 20 2010 015 030 U1 ist ein Montagetisch mit zwei Arbeitsflächen bekannt, die zueinander in der Höhe oder in der Winkellage verstellbar sind.

Es ist Aufgabe der vorliegenden Erfindung, eine verbesserte Schweißmaschine aufzuzeigen. Die Erfindung löst diese Aufgabe mit den Merkmalen in den eigenständigen Ansprüchen.

Die Schweißmaschine gemäß der vorliegenden Offenbarung umfasst ein Gehäuse, einen Arbeitstisch und ein Schweißwerkzeug. Das Schweißwerkzeug ist bevorzugt durch eine Zustellvorrichtung aus einer Grundposition in eine Schweißposition zustellbar. Die Zustellvorrichtung verfügt bevorzugt über einen steuerbaren Antrieb.

Die Schweißmaschine ist bevorzugt eine Strahlschweißmaschine, eine elektrische Widerstandsschweißmaschine oder eine Kondensator-Entladungsschweißmaschine. Das Schweißwerkzeug ist dementsprechend bevorzugt ein Laserstrahlschweißwerkzeug oder ein elektrisches Widerstandsschweißwerkzeug bzw. ein Kondensator-Entladungsschweißwerkzeug.

Schweißmaschinen der vorgenannten Art benötigen eine sehr leistungsfähige Energiequelle, insbesondere einen elektrischen Energiespeicher, der Versorgungsströme in der Höhe von mehreren Kilowatt für das Schweißwerkzeug bereitstellt, um zu starke Rückwirkungen auf das Versorgungsnetz zu vermeiden. Mit anderen Worten stellt der Energiespeicher die für die Durchführung einer oder mehrerer Schweißvorgänge notwendige Energiemenge überwiegend oder vollständig zur Verfügung. Derartige Energiespeicher, insbesondere Akkumulatoren oder Kondensatoren, haben eine Masse von mehreren hundert Kilogramm bis mehreren Tonnen und können daher nur mit sehr starken Antrieben höhenverstellbar angeordnet werden. Sie sind ferner sehr groß und bestimmen maßgeblich die Größe des Gehäuses der Schweißmaschine, in dem sie aufgenommen sind.

Um das Schweißwerkzeug mit dem Energiespeicher zu verbinden sind besondere Leitvorrichtungen notwendig, insbesondere elektrische Zuführungen in der Form von hoch leitfähigen Kupferkabeln mit einem Leitungs-Querschnitt von mehreren Quadratzentimetern. Diese Leitvorrichtungen sind einerseits teuer und weisen eine beschränkte Flexibilität und Beweglichkeit auf. Es ist daher bei bekannten Schweißmaschinen nicht oder nur in stark eingeschränktem Umfang möglich, Anpassungen vorzunehmen. Insbesondere wurde nur entweder eine Beweglichkeit des Arbeitstischs oder des Schweißwerkzeugs vorgsehen. Ferner waren bisher bekannte Schweißmaschinen für eine Durchschnittsgröße eines stehenden Werkers konstruiert und durch Werker mit körperlichen Beeinträchtigungen oder Rollstuhlfahrer schlecht oder gar nicht bedienbar.

Die vorliegende Erfindung sieht verschiedene Maßnahmen vor, die einzeln oder in Kombination eine Verbesserung der Bedienbarkeit und Anpassung an den Werker ermöglichen.

Der Arbeitstisch bildet eine untere Begrenzung des Werkbereichs (auch Arbeitszone oder Eingriffszone genannt). In der Grundposition ist das Schweißwerkzeug zumindest teilweise oberhalb des Werkbereichs und insbesondere oberhalb des Arbeitstisches angeordnet.

Der Arbeitstisch und das Schweißwerkzeug sind gegenüber dem Gehäuse durch zumindest einen Stellantrieb gesteuert höhenverstellbar. Die Höhenverstellung von Arbeitstisch und Schweißwerkzeug kann gekoppelt oder separat erfolgen. Sie kann durch einen gemeinsamen oder durch verschiedene Stellantriebe bewirkt werden. Bevorzugt ist eine gemeinsame oder abgestimmte Höherverstellung vorgesehen, die beispielsweise durch einen gemeinsamen Stellantrieb oder durch ein abgestimmtes Ansteuern von separaten Stellantrieben erreichbar ist. Eine separate Höhenverstellung des Schweißwerkzeugs kann insbesondere durch einen Stellantrieb bewirkt werden, der zusätzlich zu der Zustellvorrichtung vorliegt und von dieser unabhängig ansteuerbar ist. Alternativ kann die Zustellvorrichtung auch eine Höhenverstellung bewirken. Die Schweißmaschine kann neben dem Arbeitstisch und dem Schweißwerkzeug über eine Mehrzahl weiterer gesteuert bewegbarer Elemente verfügen, deren Bewegungen bevorzugt ebenfalls gemeinsam oder abgestimmt mit dem Arbeitstisch und/oder dem Schweißwerkzeug erfolgt. Hierzu zählen insbesondere ein Bedieninstrument, eine Schutzeinrichtung, eine Materialzufuhr, eine Materialabfuhr und eine Transportunterstützung / Hebehilfe, die an einen Werker bzw. eine bevorzugte Bedienhaltung anpassbar sind.

Die Verstellweite für die Höhenverstellung des Arbeitstisches und des Schweißwerkzeugs beträgt bevorzugt mehrere 100 mm, insbesondere mindestens 400-500 mm zwischen der höchsten und der niedrigsten einstellbaren Position. Die niedrigste Position des Arbeitstisches liegt bevorzugt bei etwa 60 bis 70 cm über dem Boden. Die höchste Position liegt bevorzugt bei etwa 120 bis 150 cm über dem Boden. Somit ist die Schweißmaschine sowohl für große stehende als auf für kleine oder sitzende Personen nutzbar bzw. auf deren Erreichbarkeitsgrenzen anpassbar.

Bevorzugt kann durch die Höhenverstellung der Werkbereich insgesamt nach oben oder nach unten verschoben werden. Dabei kann ferner die Höhe der Materialzufuhr und/oder der Materialabfuhr mit verstellt werden. Die Relativlagen zwischen zu bearbeitenden Werkstücken untereinander und dem Schweißwerkzeug können dabei unverändert bleiben. Wenn eine Einlegehilfe und/oder eine Transportunterstützung für zu bearbeitende Bauteile vorgesehen sind, können diese ebenfalls mitbewegt werden. Damit lässt sich die Höhenposition des Werkbereichs an verschiedene Größen und Arbeitshaltungen von Werkern anpassen und zwar sowohl während eines Arbeitsvorgangs als auch zwischen Arbeitsvorgängen. Es ist dann nicht erforderlich, jedes Element separat einzustellen, was erhebliche Zeit beim Wechsel eines Werkers einspart.

Ferner kann die Schweißmaschine durch Werker mit einer körperlichen Behinderung bedient werden, die an eine bestimmte Haltung gebunden sind und beispielweise in einem Rollstuhl sitzen.

Bei der Höhenverstellung kann eine angepasste Leitvorrichtung, insbesondere eine U-förmig verlaufende Vieldraht-Schlaufe innerhalb mitbewegt werden. Durch die gemeinsame oder abgestimmte Verstellbarkeit von Arbeitstisch und Schweißwerkzeug wird sichergestellt, dass die zulässige Verformbarkeit der Leitvorrichtung nicht überschritten wird, was sonst zu einer Schädigung des Materials und einer Herabsetzung der Leitfähigkeit führen könnte. Insbesondere kann vermieden werden, dass trotz der an sich sehr großen Verstellweiten für jedes Element eine Überbeanspruchung der Leitvorrichtung erzeugt wird. So kann beispielsweise verhindert werden, dass der Arbeitstisch in seine niedrigste und gleichzeitig das Schweißwerkzeug in seine höchste Position bewegt werden, wodurch ggfs. ein Überdehnen oder Abscheren der Leitvorrichtung hervorgerufen werden könnte.

Die Schweißmaschine weist bevorzugt in einem Bereich unter dem Arbeitstisch genügend Beinfreiheit für einen sitzenden Werker und einen ggfs. zusätzlich vorhandenen Rollstuhl mit vorstehenden Teilen wie Fußauflagen etc. auf. Die Fußraumtiefe (Abstand zwischen Vorderkante Arbeitstisch und Kollisionskontur des Schweißmaschinengehäuses im Fußbereich) beträgt bevorzugt mindestens 55 cm, insbesondere mehr als 65 cm. Die Beinraumtiefe (Abstand zwischen Vorderkante Arbeitstisch und Kollisionskontur des Schweißmaschinengehäuses im Bein- / Knieraum) beträgt bevorzugt mindestens 35 cm, insbesondere mehr als 45 cm.

Die Höhenverstellung von Arbeitstisch und Schweißwerkzeug erfolgt mit einer gesteuert angetriebenen Bewegung, insbesondere motorisch. Für das Ansteuern der Stellantriebe sind geeignete Bedienelemente vorgesehen. Diese können insbesondere an einem ebenfalls in der Position verstellbaren Bedieninstrument angeordnet sein. Auf manuell zu betätigende Hubmittel sowie manuell zu betätigende Klemmen oder sonstige Arretierungen für den Arbeitstisch, das Schweißwerkzeug und das Bedieninstrument kann vorteilhafterweise verzichtet werden.

Als Bedienelemente können bspw. Druckknöpfe, Schieberegler etc. eingesetzt werden, mit denen eine relative Verschiebung, Neigung oder Kippung eines gesteuert bewegbaren Elements (Hoch / Runter, Links / Rechts, Vor / Zurück, etc.) einstellbar ist. Alternativ oder zusätzlich können Bedienelemente in Form von Vorwahltasten, Tastenfeldern (bspw. Ziffern-Tastatur) o.Ä. vorgesehen sein, über die eine Wunsch-Position für ein oder mehrere gesteuert bewegbare Elemente einstellbar ist. Eine Wunschposition kann absolut (bspw. Arbeitstischhöhe 75 cm, Neigung Bedieninstrument 7° nach vorn, etc.) oder relativ (bspw. Schweißwerkzeug 50 cm über Arbeitstisch, Bedieninstrument 30 cm rechts neben Außenkante Werkbereich, etc.) einstellbar sein.

Die Stellantriebe sind bevorzugt dazu ausgebildet, den Arbeitstisch und/oder das Schweißwerkzeug sowie die ggfs. vorhandenen weiteren gesteuert bewegbaren Elemente zu bewegen und in einer eingestellten Position zu halten. Hierfür können insbesondere Spindelantriebe vorgesehen sein. Spindelantriebe haben ferner den Vorteil, dass sie das hohe Gewicht der o.g. Schweißwerkzeuge sowie des Arbeitstisches bei verhältnismäßig geringen Antriebsleistungen bewegen können und eine Sperrwirkung aufweisen, sodass bei einem Ausfall der Energieversorgung ein ungewolltes Absinken vermieden wird.

Die Bewegungsgeschwindigkeit der gesteuert bewegbaren Elemente ist bevorzugt begrenzt. Sie kann auf einen SollWert steuerbar oder regelbar sein.

Die Stellantriebe verfügen bevorzugt jeweils einzeln oder gemeinsam über eine Sicherheitseinrichtung. Die Sicherheitseinrichtung überwacht die Bewegung(en) der Stellantriebe und/oder der gesteuert bewegbaren Elemente der Schweißmaschine. Sie kann eine Unterbrechung der Bewegung oder eine Rückbewegung eines oder mehrerer Stellantriebe sowie der gesteuert bewegbaren Elemente bewirken, wenn ein sicherheitsrelevantes Ereignis erkannt wird. Ein solches Ereignis kann bspw. ein Blockieren eines Antriebs, das Auftreten einer unzulässig erhöhten oder verminderten Antriebskraft / Gegenkraft, das Auftreten einer unzulässig erhöhten oder verminderten Bewegungsgeschwindigkeit oder eine sonstige Störung wie das mechanische Versagen eines Stellantriebs sein. Die Sicherheitseinrichtung kann über beliebige geeignete Sensoren verfügen, um sicherheitsrelevante Ereignisse zu erkennen. Hierzu gehören insbesondere Kraft- oder Momentensensoren, Geschwindigkeitssensoren sowie Leistungs- oder Stromsensoren. Diese können die Bewegung eines der Stellantriebe und/oder eines der gesteuert bewegbaren Elemente detektieren.

Gemäß einer bevorzugten Ausführungsform können der Arbeitstisch und das Schweißwerkzeug an einem gemeinsamen Rahmen angeordnet sein. Der Rahmen kann über einen Stellantrieb höhenverstellbar sein. Durch die Höhenverstellung des Rahmens kann gleichzeitig eine gemeinsame Höhenverstellung von Arbeitstisch und Schweißwerkzeug erfolgen. Weiterhin kann an dem Rahmen ein Bedieninstrument angeordnet sein, das ebenfalls bei einer Bewegung des Arbeitstischens mit in der Höhe verstellt werden kann. Alternativ kann das Bedieninstrument über einen oder mehrere separate Stellantriebe gesteuert bewegbar und positionierbar sein.

An der Schweißmaschine können ferner eine Materialzufuhr und/oder eine Materialabfuhr angeordnet sein, die ebenfalls an dem gemeinsamen Rahmen befestigt oder über ein oder mehrere separate Stellantriebe gesteuert bewegbar sind.

Die Schweißmaschine weist bevorzugt eine Steuerung auf, die dazu ausgebildet ist, eine Position abzuspeichern, die für eines der gesteuert bewegbaren Elemente eingestellt worden ist. Es kann insbesondere eine gemeinsame Steuerung für die verschiedenen Stellantriebe vorgesehen sein. Die Steuerung ist dazu ausgebildet, eine oder mehrere gespeicherte Positionen wieder abzurufen und die ein oder mehreren Stellantriebe derart zu steuern, dass die abgerufenen Positionen wieder eingestellt werden.

Bevorzugt können mehrere und insbesondere alle eingestellten Positionen der gesteuert bewegbaren Elemente in jeweils einem Satz gespeichert und abgerufen werden. Somit kann die Schweißmaschine für die bevorzugten Einstellungen verschiedener Werker personalisiert und/oder für Bediensituationen voreingestellt werden. Jede dieser Voreinstellungen kann auf einfache und schnelle Weise durch Abruf der entsprechend gespeicherten Positionen bzw. eines gespeicherten Satzes von Positionen wieder abgerufen werden. Das Abrufen kann über beliebige Mittel erfolgen. Es können ein oder mehrere Bedienelemente vorgesehen sein, die einen Sofortzugriff für den Abruf eines Satzes von gespeicherten Positionen ermöglichen. Alternativ oder zusätzlich können Datenträger vorhanden sein, über die vorgespeicherte Datensätze aufrufbar sind. Solche Datenträger können bspw. Chipkarten, RFID-Chips o.Ä. sein. Der Datenaustausch zwischen der Schweißmaschine, insbesondere der gemeinsamen Steuerung für die gesteuert bewegbaren Elemente, und einem Datenträger kann auf beliebige Weise erfolgen. An der Schweißmaschine kann ein Datenträgerlesegerät oder ein Kommunikationsgerät vorhanden sein, das mit einem Datenträger kontaktieren oder berührungslos Informationen austauschen kann.

In den Unteransprüchen sind weitere bevorzugte Ausführungsformen der Erfindung angegeben.

Die Erfindung ist in den Zeichnungen beispielsweise und schematisch dargestellt. Es zeigen:
- Figur 1:: eine Schweißmaschine gemäß der vorliegenden Offenbarung in perspektivischer Darstellung;
- Figur 2:: eine schematische Frontansicht einer Schweißmaschine gemäß einer alternativen Ausführungsform.

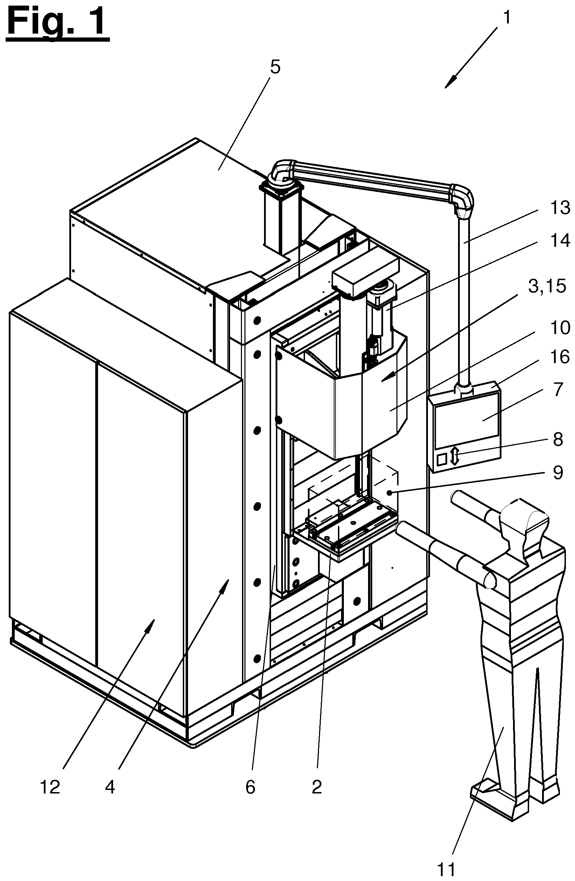

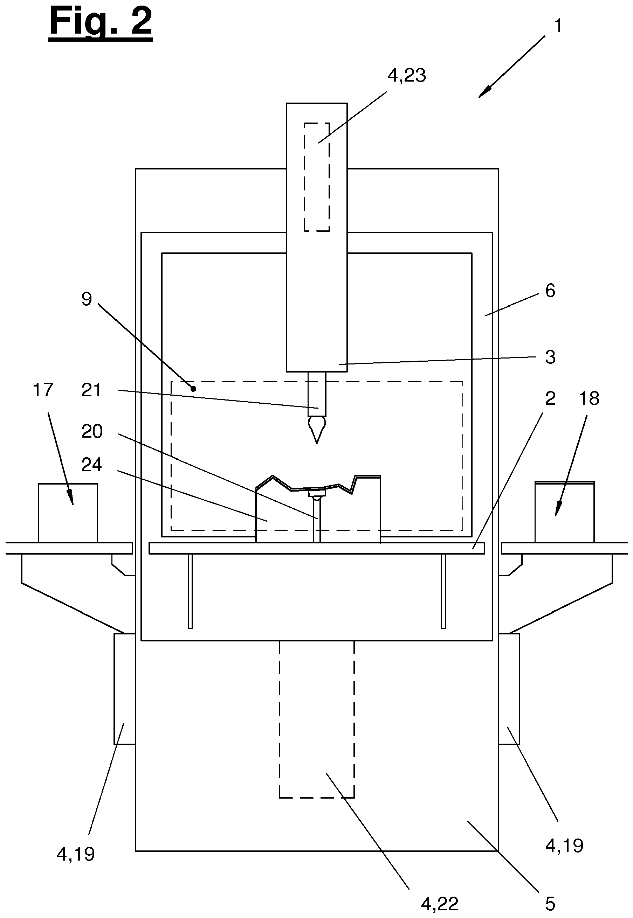

Zwei bevorzugte Ausführungsformen einer Schweißmaschine gemäß der vorliegenden Offenbarung sind in den Figuren 1 und 2 dargestellt.

Figur 1 zeigt eine Schweißmaschine (1) mit einem Gehäuse (5). An der Vorderseite des Gehäuses (5) ist ein Arbeitstisch (2) höhenverstellbar angeordnet. Der Arbeitstisch (2) kann beliebig ausgebildet sein und eine beliebige Größe haben. Er bildet die untere Begrenzung für einen Werkbereich (9). Der Werkbereich (9) ist in der Regel für einen oder mehrere Werker (11) zugänglich. An dem Werkbereich (9) können ein oder mehrere Werkstücke angeordnet, ausgerichtet und mit ein oder mehreren Schweißverbindungen versehen werden. Die Durchführung der Schweißvorgänge kann auf beliebige Weise erfolgen.

Die Schweißmaschine (1) ist bevorzugt als Strahlschweißmaschine mit einem Strahl-Schweißwerkzeug oder als Widerstands-Schweißmaschine mit einem ggfs. mehrteiligen Schweißwerkzeug ausgebildet. Besonders bevorzugt ist die Schweißmaschine (1) eine Kondensator-Entladungsschweißmaschine.

Zur Herstellung von Schweißverbindungen ist ein Schweißwerkzeug (3) vorgesehen. Dieses ist oberhalb des Arbeitstisches (2) und somit oberhalb des Werkbereichs (9) angeordnet. In Figur 1 ist das Schweißwerkzeug (3) in einer Grundposition dargestellt. Aus der Grundposition heraus kann es in eine Arbeitsposition bewegt und dabei an die ein oder mehreren Werkstücke zugestellt werden. Hierfür ist eine Zustellvorrichtung (14) vorgesehen. In dem dargestellten Beispiel wird die Zustellvorrichtung (14) durch einen Antriebszylinder gebildet und ermöglicht eine lineare Zustellung in vertikaler Richtung. Alternativ oder zusätzlich kann die Zustellvorrichtung anders ausgebildet sein und zusätzliche Bewegungsachsen aufweisen. Es können insbesondere eine horizontale Zustellung sowie eine Rotation des Schweißwerkzeugs um eine oder mehrere Achsen vorgesehen sein.

Bei dem in Figur 1 gezeigten Beispiel ist an der Schweißmaschine (1) eine Schutzeinrichtung in Form einer beweglichen Blende (10) vorgesehen. Die Blende (10) ist in der Zeichnung in einer oberen Position dargestellt. Sie kann vor der Herstellung einer Schweißverbindung ggf. abgesenkt werden, um den Werkbereich (9) vor einem Zugriff durch einen Werker (11) abzuschirmen. Alternativ oder zusätzlich zur Blende (10) können beliebige andere Sicherheitsmechanismen vorgesehen sein. Bevorzugt werden diese Sicherheitsmechanismen und ggfs. die gesamte Schutzeinrichtung bei einer Höhenverstellung des Arbeitsbereichs (9) mitbewegt.

Der Arbeitstisch (2) und das Schweißwerkzeug (3) sind in dem Beispiel gemäß Figur 1 an einem gemeinsamen Rahmen (6) angeordnet. Der Arbeitstisch (2) und die Schweißvorrichtung (3) sind hier fest mit dem Rahmen (6) verbunden. Eine Höhenverstellung für den Arbeitstisch (2) und die Schweißvorrichtung (3) erfolgt gemeinsam und mechanisch gekoppelt mit einer Höhenverstellung des Rahmens (6). Demzufolge ist zumindest ein Stellantrieb (4) vorgesehen, der eine Hubvorrichtung für den Rahmen (6) und damit indirekt ebenfalls eine Hubvorrichtung für den Arbeitstisch (2) und die Schweißvorrichtung (3) bildet. Alternativ oder zusätzlich können separate Stellantriebe (4), insbesondere separate Hubvorrichtungen für den Arbeitstisch (2) und das Schweißwerkzeug (3) vorgesehen sein.

Die Schweißmaschine (1) weist eine Steuerung (12) auf, die mit dem zumindest einen Stellantrieb (4) für den Arbeitstisch (2) und die Schweißvorrichtung (3) verbunden ist. Darüber hinaus können weitere Stellantriebe (4) mit der Steuerung (12) verbunden sein. Es kann sich insbesondere um eine gemeinsame Steuerung (12) für alle Stellantriebe (4) der gesteuert bewegbaren Elemente (2,3,16,17,18) der Schweißmaschine (1) handeln.

Die Steuerung (12) ist dazu ausgebildet, geeignete Steuersignale zur Energiebeaufschlagung der Stellantriebe (4) zu erzeugen. Sie umfasst bevorzugt eine Geschwindigkeitssteuerung oder Geschwindigkeitsregelung, um eine Bewegungsgeschwindigkeit eines gesteuert bewegbaren Elements (2, 3, 16, 17, 18) auf eine Soll-Geschwindigkeit einzustellen. Sie kann alternativ oder zusätzlich eine Lagesteuerung oder Lageregelung aufweisen, um eine gesteuert bewegbares Element (2, 3, 16, 17, 18) ein eine Wunschposition oder eine gespeicherte Position zu bewegen.

An den Stellantrieben (4) bzw. an den gesteuert bewegbaren Elementen sind bevorzugt Sensoren angeordnet, mit denen eine eingestellte Position erfasst wird. Die Sensoren können beliebig ausgebildet sein. Es können insbesondere Positionssensoren, wie beispielsweise Lage- oder Stellwegsensoren vorgesehen sein. Alternativ oder zusätzlich können Bewegungssensoren, wie Drehzahlmesser, Resolver oder dergleichen vorgesehen sein, mit denen eine eingestellte Position relativ zu einer vorbekannten oder separat feststellbaren Ausgangslage erfassbar ist.

Die Steuerung (12) ist bevorzugt dazu ausgebildet, die Messsignale der vorerwähnten Sensoren abzufragen und einzeln oder kombiniert abzuspeichern und/oder zu verarbeiten. Es ist insbesondere vorgesehen, dass Sätze von eingestellten Positionen in einer geordneten Datenstruktur abgelegt werden. In einem solchen Satz können beispielsweise eine eingestellte Höhenposition des Arbeitstisches (2), eine ggf. separat eingestellte Höhenposition des Schweißwerkzeugs (3) sowie weitere eingestellte Positionen der gesteuert bewegbaren Elemente abgespeichert werden.

Die Steuerung (12) ist ferner bevorzugt dazu ausgebildet, bei einem Abruf einer gespeicherten Position bzw. eines Satzes von gespeicherten Positionen die Stellantriebe (4) derart anzusteuern, dass die gesteuert bewegbaren Elemente (2, 3, 16, 17, 18) wieder in die entsprechende abgerufene Position bewegt werden. Wenn ein Satz abgerufen wird, können bevorzugt mehrere und insbesondere alle Schnellantriebe (4) gleichzeigt angesteuert werden.

Die Steuerung (12) kann als separate Steuerung für die Stellantriebe (4) ausgebildet sein, die ausschließlich für die Ansteuerung der bewegbaren Elemente (2, 3, 16, 17, 18) dient. Alternativ und bevorzugt ist die Steuerung (12) mit einer Steuerung für die Durchführung der Schweißvorgänge und/oder für die Energiebeaufschlagung des Schweißwerkzeugs (3) zusammengefasst.

An der Schweißmaschine (1) ist bevorzugt mindestens ein Bedieninstrument (16) angeordnet, das Anzeigen (7) und Bedienelemente (8) für die gesteuert bewegbaren Elemente (2, 3, 16, 17, 18) sowie ggfs. für weitere Funktionen der Schweißmaschine (1) trägt. Ein Werker (11) wird bei der Bedienung der Schweißmaschine (1) häufig zwischen dem Werkbereich (9) und dem Bedieninstrument (16) hin und her greifen. Es ist daher bevorzugt vorgesehen, dass das Bedieninstrument (16) beweglich angeordnet und insbesondere über ein oder mehrere Stellantriebe (4) gesteuert bewegbar ist. Die Position des Bedieninstruments (16) kann separat oder in Kombination mit der Position des Arbeitstisches (2) und/oder des Schweißwerkzeugs (3) eingestellt werden. Es können ferner bevorzugte Relativlagen zwischen Werkbereich (9) und Bedieninstrument (16) einstellbar und speicherbar sein.

Bei dem in Figur 1 gezeigten Beispiel hängt ein Bedieninstrument (16) in Form einer Bedientafel an einem mehrachsigen Ausleger, der eine Bewegungsvorrichtung (13) für das Bedieninstrument (16) bildet. Das Bedieninstrument (16) kann zumindest in der Höhe verstellbar sein. Bevorzugt sind weiterhin eine horizontale Verschiebung sowie eine Drehung des Bedieninstruments (16) möglich. Der mehrachsige Ausleger kann mit dem höhenverstellbaren Rahmen (6) mechanisch gekoppelt sein.

Figur 2 zeigt eine schematische Frontansicht auf eine Schweißmaschine (1) gemäß einer zweiten bevorzugten Ausführung. Die Schweißmaschine (1) ist hier als elektrische Widerstandsschweißmaschine, insbesondere als Kondensator-Entladungsmaschine ausgebildet. Sie weist eine erste Schweißelektrode (20) und eine zweite Schweißelektrode (21) auf. Die erste Schweißelektrode (20) ist am Arbeitstisch (2) angeordnet. Die zweite Schweißelektrode (21) ist am Schweißwerkzeug (3) angeordnet. Der Arbeitstisch (2) ist in diesem Beispiel erneut fest mit einem Rahmen (6) verbunden, der über einen Stellantrieb (4) in Form einer Hubvorrichtung (22) gesteuert bewegbar ist. Eine elektrische Zuführung (nicht dargestellt) der ersten Schweißelektrode (20) wird gemeinsam mit der Position des Arbeitstisches (2) verstellt. Die elektrische Zuführung kann insbesondere durch ein Kupferband oder ein Kabel gebildet sein. Alternativ kann die elektrische Zuführung durch einen Schleifkontakt zwischen dem Arbeitstisch (2) und einer Stromführungsschiene gebildet sein. Eine elektrische Zuführung (nicht dargestellt) der zweiten Schweißelektrode (21) kann gemeinsam mit der Position des Schweißwerkzeugs (3) verstellbar sein. Sie kann entsprechend ausgebildet sein.

Das Schweißwerkzeug (3) ist gegenüber dem Rahmen (6) über einen weiteren Stellantrieb (4), hier insbesondere eine Hubvorrichtung (23) höhenverstellbar. Durch diese Hubvorrichtung (23) kann die Größe des Schweißfensters, also des vertikalen Abstandes zwischen der zweiten Schweißelektrode (21) in der Grundposition und dem Arbeitstisch (2) eingestellt werden. Die Größe des Schweißfensters kann für die Herstellung von Schweißverbindungen an großen oder sperrigen Bauteilen vergrößert und für die Bearbeitung von kleinen Bauteilen verkleinert werden.

An der Schweißmaschine (1) sind in dem Beispiel von Figur 2 eine Materialzufuhr (17) und eine Materialabfuhr (18) angeordnet. Diese sind hier beispielhaft seitlich am Gehäuse (5) angeordnet. Alternativ können eine Materialzufuhr (17) und/oder eine Materialzufuhr (18) an beliebiger anderer Stelle, insbesondere an der Vorderseite des Gehäuses (5) und neben dem Arbeitstisch (2) angeordnet sein. Sie können einzeln oder gemeinsam am Gehäuse (5) befestigt oder separat aufgestellt sein, wobei auch bei separater Aufstellung Stellantriebe vorgesehen sein können, die über Eingaben an der Schweißmaschine (1) bzw. deren Steuerung (12) mit angesteuert werden.

Über die Materialzufuhr (17) und die Materialabfuhr (18) können ein oder mehrere zu bearbeitende Werkstücke in den Zugriffsbereich eines Werkers (11) gebracht und nach der Herstellung einer Schweißverbindung wieder daraus entfernt werden. Die Materialzufuhr (17) und die Materialabfuhr (18) können mit einem übergeordneten Materiallogistiksystem verbunden sein. Sie können Transportvorrichtungen und/oder Einlegehilfen (24) umfassen und eine ein teil- oder vollautomatisierte Zuführung und Wegführung von Bauteilen ermöglichen. Es kann ferner eine Hebehilfe o.Ä. vorgesehen sein, mit der bspw. schwere Bauteile zwischen der Materialzufuhr (17), dem Arbeitstisch (2) und der Materialabfuhr (18) transportierbar sind.

Die Materialzufuhr (17) und/oder die Materialabfuhr (18) sind bevorzugt über separate Stellantriebe (4) gesteuert bewegbar. Die Schweißmaschine (1) weist in dem Beispiel gemäß Figur 2 Positionierantriebe (19) auf, die zumindest eine Höhenverstellung der Materialzufuhr (17) und der Materialabfuhr (18) ermöglichen. Die Positionierung kann separat oder ggf. gekoppelt mit der Positionierung des Arbeitstisches (2) erfolgen.

Abwandlungen der Erfindung sind in verschiedener Weise möglich. Insbesondere können die zu den verschiedenen Ausführungsbeispielen gezeigten oder beschriebenen Merkmale in beliebiger Weise kombiniert, gegeneinander ersetzt, ergänzt oder weggelassen werden.

Ein Bedieninstrument (16) kann an dem gemeinsamen Rahmen (6) angeordnet sein und gemeinsam mit diesem höhenverstellbar sein. Alternativ oder zusätzlich kann ein Bedieninstrument (16) separate Stellantriebe (4,13) für eine Höhenverstellung, seitliche Verschiebung, Neigung und/oder Rotation um eine vertikale Achse etc. aufweisen.

Die Schweißmaschine kann ein Datenübertragungsgerät aufweisen, um Informationen, insbesondere Steuerdaten, über abzuspeichernde oder abzurufende Positionen mit externen Betriebsmitteln auszutauschen. Derartige Betriebsmittel können bspw. höhenverstellbare Materialbereitstellungen oder Logistikeinrichtungen wie teil- oder vollautomatisierte Handhabungsgeräte und Förderfahrzeuge sein. Beispielsweise kann die Ist-Höhe des Arbeitstisches (2) oder einer Materialabfuhr (18) an einen automatisierten Flurförderer übertragen werden, der ein Transportwerkzeug in eine angepasste Höhenlage bringt, um ein fertig geschweißtes Werkstück aufzunehmen und zu einer nächsten Bearbeitungsstation zu befördern.

Eine Ansteuerung der gesteuert bewegbaren Elemente (2,3,16,17,18) bzw. der Stellantriebe (4) kann durch externe Geräte ausgelöst oder durchgeführt werden, insbesondere durch eine übergeordnete Anlagensteuerung.

Der Rahmen (6) kann beliebig ausgebildet sein. Er kann insbesondere als C-Rahmen, als H-Rahmen, als Portal oder als O-Rahmen vorgesehen sein.

### BEZUGSZEICHENLISTE

- 1: Schweißmaschine
- 2: Arbeitstisch (gesteuert bewegbares Element)
- 3: Schweißwerkzeug (gesteuert bewegbares Element)
- 4: Stellantrieb / Stellantriebe
- 5: Gehäuse (mit Energiequelle / Energiespeicher)
- 6: Rahmen (gesteuert bewegbares Element)
- 7: Anzeige
- 8: Bedienelemente
- 9: Werkbereich
- 10: Blende / Schutzeinrichtung
- 11: Werker
- 12: Steuerung
- 13: Bewegungsvorrichtung
- 14: Zustellvorrichtung
- 15: Grundposition
- 16: Bedieninstrument (gesteuert bewegbares Element)
- 17: Materialzufuhr (gesteuert bewegbares Element)
- 18: Materialabfuhr (gesteuert bewegbares Element)
- 19: Positionierantrieb
- 20: Erste / Untere Schweißelektrode
- 21: Zweite / Obere Schweißelektrode
- 22: Hubvorrichtung
- 23: Hubvorrichtung
- 24: Einlegetechnik

## Patentansprüche

1. Schweißmaschine mit einem Gehäuse (5), einem Arbeitstisch (2) und einem Schweißwerkzeug (3), wobei die Schweißmaschine zum manuellen Schweißen ausgebildet ist und der Arbeitstisch (2) eine Begrenzung eines für einen Werker (11) zugänglichen Werkbereichs (9) bildet, **dadurch gekennzeichnet, dass** der Arbeitstisch (2) und das Schweißwerkzeug (3) gegenüber dem Gehäuse (5) durch zumindest einen Stellantrieb (4) gesteuert höhenverstellbar sind.

2. Schweißmaschine nach Anspruch 1, **dadurch gekennzeichnet, dass** der Arbeitstisch (2) und das Schweißwerkzeug (3) an einem gemeinsamen Rahmen (6) angeordnet sind.

3. Schweißmaschine nach einem der Ansprüche 1 oder 2, **dadurch gekennzeichnet, dass** der Rahmen (6) über zumindest einen Stellantrieb (4) höhenverstellbar ist.

4. Schweißmaschine nach einem der vorhergehenden Ansprüche, **dadurch gekennzeichnet, dass** das Schweißwerkzeug (3) durch einen Zustellantrieb (15) relativ zum Werkbereich (9) bewegbar, insbesondere an ein Werkstück zustellbar ist.

5. Schweißmaschine nach einem der vorhergehenden Ansprüche, **dadurch gekennzeichnet, dass** an der Schweißmaschine (1) eine Materialzufuhr (17) und/oder eine Materialabfuhr (18) angeordnet sind, die über einen oder mehrere Stellantriebe (4) gesteuert bewegbar sind.

6. Schweißmaschine nach einem der vorhergehenden Ansprüche, **dadurch gekennzeichnet, dass** an der Schweißmaschine (1) eine Schutzeinrichtung (10) angeordnet ist, die über einen oder mehrere Stellantriebe (4) gesteuert bewegbar ist.

7. Schweißmaschine nach einem der vorhergehenden Ansprüche, **dadurch gekennzeichnet, dass** die Schweißmaschine (1) ein oder mehrere Bedienelemente (8) aufweist, mit denen zumindest eine Position des Arbeitstisch (2) und des Schweißwerkzeug (3) einstellbar sind, insbesondere ein oder mehrere Bedienelemente (8), die einen Sofortzugriff für den Abruf eines Satzes von gespeicherten Positionen ermöglichen, und wobei über die Bedienelemente (8) Bewegungen eines gesteuert bewegbaren Elements (2, 3, 16, 17, 18) steuerbar sind, die insbesondere durch ein oder mehrere Stellantriebe (4, 13, 19, 22, 23) bewirkt werden.

8. Schweißmaschine nach einem der vorhergehenden Ansprüche, **dadurch gekennzeichnet, dass** über die Bedienelemente (8) eine Wunschposition eines gesteuert bewegbaren Elements (2, 3, 16, 17, 18) einstellbar ist.

9. Schweißmaschine nach einem der vorhergehenden Ansprüche, **dadurch gekennzeichnet, dass** ein Stellantrieb (4) eine Hubvorrichtung (22) für den Rahmen (6) und/oder eine Hubvorrichtung (22) für den Arbeitstisch (2) und/oder eine Hubvorrichtung (23) für das Schweißwerkzeug (3) und/oder eine Bewegungsvorrichtung (13) für ein Bedieninstrument (16) und/oder ein Positionierantrieb für eine Materialzufuhr (17) und/oder eine Materialabfuhr (18) ist.

10. Schweißmaschine nach einem der vorhergehenden Ansprüche, **dadurch gekennzeichnet, dass** die Schweißmaschine (1) eine Steuerung (12) aufweist, die dazu ausgebildet ist, eine eingestellte Position eines gesteuert bewegbaren Elements (2, 3, 16, 17, 18) abzuspeichern sowie eine oder mehrere gespeicherte Positionen, insbesondere einen Satz von gespeicherten Positionen, abzurufen und die ein oder mehreren Stellantriebe (4) derart zu steuern, dass eine abgerufene Position wieder eingestellt wird.

11. Schweißmaschine nach einem der vorhergehenden Ansprüche, **dadurch gekennzeichnet, dass** die Schweißmaschine ein Datenübertragungsgerät aufweist, um Informationen, insbesondere Steuerdaten, über abzuspeichernde oder abzurufende Positionen mit externen Betriebsmitteln auszutauschen.

12. Schweißmaschine nach einem der vorhergehenden Ansprüche, **dadurch gekennzeichnet, dass** die Schweißmaschine eine Strahlschweißmaschine oder eine elektrische Widerstandsschweißmaschine oder eine Kondensator-Entladungsschweißmaschine ist.

13. Schweißmaschine nach einem der vorhergehenden Ansprüche, **dadurch gekennzeichnet, dass** die Schweißmaschine (1) eine erste und eine zweite Schweißelektrode (20,21) aufweist.

14. Schweißmaschine nach einem der vorhergehenden Ansprüche, **dadurch gekennzeichnet, dass** die erste Schweißelektrode (20) am Arbeitstisch (2) angeordnet ist und eine elektrische Zuführung der ersten Schweißelektrode (20) gemeinsam mit der Position des Arbeitstisches (2) verstellbar ist.

15. Schweißmaschine nach einem der vorhergehenden Ansprüche, **dadurch gekennzeichnet, dass** die zweite Schweißelektrode (21) am Schweißwerkzeug (3) angeordnet ist und eine elektrische Zuführung der zweiten Schweißelektrode gemeinsam mit der Position des Schweißwerkzeugs (3) verstellbar ist.

## Claims

1. Welding machine with a housing (5), a work table (2) and a welding tool (3), the welding machine being designed for manual welding and the work table (2) forming a delimitation of a working area (9) that is accessible for a worker (11), **characterized in that** the work table (2) and the welding tool (3) are adjustable in height with respect to the housing (5) in a controlled manner by at least one adjusting drive (4).

2. Welding machine according to Claim 1, **characterized in that** the work table (2) and the welding tool (3) are arranged on a common frame (6).

3. Welding machine according to either of Claims 1 and 2, **characterized in that** the frame (6) is adjustable in height by means of at least one adjusting drive (4).

4. Welding machine according to one of the preceding claims, **characterized in that** the welding tool (3) can be moved in relation to the working area (9) by an infeed drive (15), in particular can be infed to a workpiece.

5. Welding machine according to one of the preceding claims, **characterized in that** a material feed (17) and/or a material discharge (18), which can be moved in a controlled manner by means of one or more adjusting drives (4), are arranged on the welding machine (1).

6. Welding machine according to one of the preceding claims, **characterized in that** a protective device (10), which can be moved in a controlled manner by means of one or more adjusting drives (4), is arranged on the welding machine (1).

7. Welding machine according to one of the preceding claims, **characterized in that** the welding machine (1) has one or more operator control elements (8) with which at least one position of the work table (2) and the welding tool (3) can be set, in particular one or more operator control elements (8) which allow immediate access for the retrieval of a set of stored positions, and movements of an element (2, 3, 16, 17, 18) that can be moved in a controlled manner, which are brought about in particular by one or more adjusting drives (4, 13, 19, 22, 23), being controllable by means of the operator control elements (8).

8. Welding machine according to one of the preceding claims, **characterized in that** a desired position of an element (2, 3, 16, 17, 18) that can be moved in a controlled manner can be set by means of the operator control elements (8).

9. Welding machine according to one of the preceding claims, **characterized in that** an adjusting drive (4) is a lifting device (22) for the frame (6) and/or a lifting device (22) for the work table (2) and/or a lifting device (23) for the welding tool (3) and/or a moving device (13) for an operator control instrument (16) and/or a positioning drive for a material feed (17) and/or a material discharge (18).

10. Welding machine according to one of the preceding claims, **characterized in that** the welding machine (1) has a controller (12), which is designed to store a set position of an element (2, 3, 16, 17, 18) that can be moved in a controlled manner and also to retrieve one or more stored positions, in particular a set of stored positions, and to control the one or more adjusting drives (4) in such a way that a retrieved position is set again.

11. Welding machine according to one of the preceding claims, **characterized in that** the welding machine has a data transmission unit, in order to exchange information, in particular control data, about positions to be stored or to be retrieved with external operating means.

12. Welding machine according to one of the preceding claims, **characterized in that** the welding machine is a beam welding machine or an electrical resistance welding machine or a capacitor discharge welding machine.

13. Welding machine according to one of the preceding claims, **characterized in that** the welding machine (1) has a first and a second welding electrode (20, 21).

14. Welding machine according to one of the preceding claims, **characterized in that** the first welding electrode (20) is arranged on the work table (2) and an electrical feed of the first welding electrode (20) can be adjusted together with the position of the work table (2).

15. Welding machine according to one of the preceding claims, **characterized in that** the second welding electrode (21) is arranged on the welding tool (3) and an electrical feed of the second welding electrode can be adjusted together with the position of the welding tool (3).

## Revendications

1. Machine à souder comprenant un boîtier (5), une table de travail (2) et un outil de soudage (3), la machine à souder étant configurée pour le soudage manuel et la table de travail (2) formant une limitation d'une zone d'ouvrage (9) accessible à un ouvrier (11), **caractérisée en ce que** la table de travail (2) et l'outil de soudage (3) sont positionnables en hauteur de manière commandée par rapport au boîtier (5) par au moins un mécanisme actionneur (4).

2. Machine à souder selon la revendication 1, **caractérisée en ce que** la table de travail (2) et l'outil de soudage (3) sont disposés sur un châssis (6) commun.

3. Machine à souder selon l'une des revendications 1 ou 2, **caractérisée en ce que** le châssis (6) est positionnable en hauteur par le biais d'au moins un mécanisme actionneur (4).

4. Machine à souder selon l'une des revendications précédentes, **caractérisée en ce que** l'outil de soudage (3) peut être déplacé par rapport à la zone d'ouvrage (9) par un mécanisme d'approche (15), peut notamment être approché d'une pièce à usiner.

5. Machine à souder selon l'une des revendications précédentes, **caractérisée en ce qu'**une amenée de matériel (17) et/ou une évacuation de matériel (18) sont disposées sur la machine à souder (1), lesquelles sont déplaçables de manière commandée par le biais d'un ou plusieurs mécanismes actionneurs (4).

6. Machine à souder selon l'une des revendications précédentes, **caractérisée en ce qu'**un dispositif de protection (10) est disposé sur la machine à souder (1), lequel est déplaçable de manière commandée par le biais d'un ou plusieurs mécanismes actionneurs (4).

7. Machine à souder selon l'une des revendications précédentes, **caractérisée en ce que** la machine à souder (1) possède un ou plusieurs éléments de commande (8) qui permettent de régler au moins une position de la table de travail (2) et de l'outil de soudage (3), notamment un ou plusieurs éléments de commande (8) qui permettent un accès immédiat pour l'invocation d'un jeu de positions mémorisées, et les éléments de commande (8) permettant de commander les mouvements d'un élément (2, 3, 16, 17, 18) déplaçable de manière commandée, lesquels sont notamment produits par un ou plusieurs mécanismes actionneurs (4, 13, 19, 22, 23).

8. Machine à souder selon l'une des revendications précédentes, **caractérisée en ce qu'**une position souhaitée d'un élément (2, 3, 16, 17, 18) déplaçable de manière commandée peut être réglée par le biais des éléments de commande (8).

9. Machine à souder selon l'une des revendications précédentes, **caractérisée en ce qu'**un mécanisme actionneur (4) est un dispositif de levage (22) pour le châssis (6) et/ou un dispositif de levage (22) pour la table de travail (2) et/ou un dispositif de levage (23) pour l'outil de soudage (3) et/ou un dispositif de déplacement (13) pour un instrument de conduite (16) et/ou un mécanisme de positionnement pour une amenée de matériel (17) et/ou une évacuation de matériau (18).

10. Machine à souder selon l'une des revendications précédentes, **caractérisée en ce que** la machine à souder (1) possède une commande (12) qui est configurée pour mémoriser une position réglée d'un élément (2, 3, 16, 17, 18) déplaçable de manière commandée ainsi que pour invoquer une ou plusieurs positions mémorisées, notamment un jeu de positions mémorisées, et commander le ou les plusieurs mécanismes actionneurs (4) de telle sorte qu'une position invoquée est de nouveau réglée.

11. Machine à souder selon l'une des revendications précédentes, **caractérisée en ce que** la machine à souder possède un appareil de transmission de données pour échanger des informations, notamment des données de commande, sur des positions à mémoriser ou à invoquer avec des ressources externes.

12. Machine à souder selon l'une des revendications précédentes, **caractérisée en ce que** la machine à souder est une machine à souder par faisceaux ou une machine à souder par résistance électrique ou une machine à souder par décharge de condensateur.

13. Machine à souder selon l'une des revendications précédentes, **caractérisée en ce que** la machine à souder (1) possède une première et une deuxième électrode de soudage (20, 21).

14. Machine à souder selon l'une des revendications précédentes, **caractérisée en ce que** la première électrode de soudage (20) est disposée sur la table de travail (2) et une alimentation électrique de la première électrode de soudage (20) peut être positionnée en commun avec la position de la table de travail (2).

15. Machine à souder selon l'une des revendications précédentes, **caractérisée en ce que** la deuxième électrode de soudage (21) est disposée sur l'outil de soudage (3) et une alimentation électrique de la deuxième électrode de soudage peut être positionnée en commun avec la position de l'outil de soudage (3).
